(19) Europäisches Patentamt / European Patent Office / Office européen des brevets

(11) **EP 2 713 761 B1**

(12) **EUROPEAN PATENT SPECIFICATION**

(45) Date of publication and mention
of the grant of the patent:
**20.01.2016 Bulletin 2016/03**

(21) Application number: **12720208.3**

(22) Date of filing: **14.05.2012**

(51) Int Cl.:
***A23F 3/06*** (2006.01)

(86) International application number:
**PCT/EP2012/058878**

(87) International publication number:
**WO 2012/159910 (29.11.2012 Gazette 2012/48)**

(54) **PROCESS FOR MANUFACTURING GREEN TEA**

VERFAHREN ZUR HERSTELLUNG VON GRÜNEM TEE

PROCÉDÉ POUR LA FABRICATION DE THÉ VERT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.05.2011 EP 11167053**

(43) Date of publication of application:
**09.04.2014 Bulletin 2014/15**

(73) Proprietors:
• **Unilever PLC**
**London, Greater London EC4Y 0DY (GB)**
Designated Contracting States:
**CY GB IE MT**
• **Unilever N.V.**
**3013 AL Rotterdam (NL)**
Designated Contracting States:
**AL AT BE BG CH CZ DE DK EE ES FI FR GR HR
HU IS IT LI LT LU LV MC MK NL NO PL PT RO RS
SE SI SK SM TR**

(72) Inventor: **PIERRE, Francois-Xavier, Henri**
**84510 Caumont sur Durance (FR)**

(74) Representative: **Askew, Sarah Elizabeth**
**Unilever PLC**
**Unilever Patent Group**
**Colworth House**
**Sharnbrook**
**Bedford MK44 1LQ (GB)**

(56) References cited:
WO-A1-2006/021317      GB-A- 893 551
JP-A- 2002 223 699      US-A1- 2009 117 250

• DATABASE WPI Week 201058 Thomson
Scientific, London, GB; AN 2010-J99698
XP002679297, & CN 101 755 949 A (HE Q) 30 June
2010 (2010-06-30)
• DATABASE WPI Week 198850 Thomson
Scientific, London, GB; AN 1988-359317
XP002679324, & SU 1 400 589 A (DZNELADZE Z
YU) 7 June 1988 (1988-06-07)
• DATABASE WPI Week 201024 Thomson
Scientific, London, GB; AN 2010-A38852
XP002679325, & KR 2009 0130988 A (BOOK H J)
28 December 2009 (2009-12-28)
• DATABASE WPI Week 199013 Thomson
Scientific, London, GB; AN 1990-098148
XP002679298, & SU 1 489 683 A (KHVEDELIDZE
V G) 30 June 1989 (1989-06-30)
• DATABASE WPI Week 200871 Thomson
Scientific, London, GB; AN 2008-M09484
XP002679299, & KR 100 811 464 B1
(AMOREPACIFIC CORP) 7 March 2008
(2008-03-07)

## Description

## TECHNICAL FIELD OF THE INVENTION

The present invention relates to a process for manufacturing green leaf tea products. More particularly the present invention relates to green leaf tea products obtained from fresh tea leaves which are separated from stem material whilst comprising active endogenous enzymes.

## BACKGROUND TO THE INVENTION

Beverages based on the tea plant (*Camellia sinensis*) have been popular throughout the world for many hundreds of years. Traditionally such beverages are produced by infusing leaf tea in hot water.

Most of the tea consumed in the Western World is so-called black tea which is obtained by harvesting leaves of the plant *Camellia sinensis* and withering, rolling, enzymatically oxidizing (fermenting), firing and sorting them. However the leaves can be processed without the fermentation step to produce what is known as green tea. Such tea is widely consumed in parts of the People's Republic of China, Japan, North Africa and the Middle East. In another variation oolong tea is prepared by partial fermentation.

Tea leaves contain a large number of enzymes, biochemical intermediates and structural elements normally associated with plant growth and photosynthesis together with substances that are responsible for the characteristics of tea itself. These include flavanols, flavanol glycosides, polyphenolic acids, caffeine, amino acids, mono- and polysaccharides, proteins, cellulose, lipids, chlorophylls and volatiles.

Flavanols or more specifically flavan-3-ols tend to constitute up to 30% of the dry weight of freshly picked tea leaves and are known as catechins. Green tea retains most of the catechins, but their content in black tea is greatly reduced due to both chemical and enzymatic oxidations taking place during fermentation to give theaflavins and thearubigins. In conventional green tea manufacture a thermal treatment (e.g. steaming or pan firing) is used to deactivate the endogenous enzymes and thereby prevent fermentation during subsequent shaping and comminution steps.

When tea is harvested, it is picked as shoots with each shoot comprising stem and leaves, wherein the leaves usually include an active growing bud, e.g. in the form of the first two, three, or four leaves together with the unopened bud (e.g., so-called "two-and-a-bud" and/or "three-and-a-bud" material).

Japanese patent application published as JP 2002-223699 A discloses manufacture of a green tea pellet wherein a crude tea is manufactured by steaming the raw tea leaves of the "first plucked tea" to inactivate the antioxidants contained in the raw tea leaves, and then subjecting these tea leaves to a series of operations including coarse rolling, rolling and twisting, intermediate rolling, refined rolling and drying. Furthermore, the stem portion is sorted and removed from the leaf component of the crude tea, and the crude tea is then re-dried to reduce the moisture content thereof to an amount no more than 5%.

We have now found that by separating fresh tea leaves from the stems before the enzyme deactivation step and then selectively processing the leaves, green leaf tea products which produce infusions with exceptional green colour and/or an unexpectedly good flavour can be made.

## TESTS AND DEFINITIONS

### Tea

"Tea" for the purposes of the present invention means material from *Camellia sinensis* var. *sinensis* and/or *Camellia sinensis* var. *assamica.* Especially preferred is material from var. *assamica* as this has a higher level of tea actives than var. *sinensis.*

"Stem" means the elongate tea plant material which is not part of the leaf proper

"Leaf tea" for the purposes of this invention means a tea product that contains tea leaves in an uninfused form, and that has been dried to a moisture content of less than 30% by weight, and usually has a water content in the range 1 to 10% by weight (i.e. "made tea").

"Green tea" refers to substantially unfermented tea. Green tea comprises polyphenols, wherein the polyphenols comprise catechins in an amount of at least 60% by weight of the polyphenols, preferably at least 70%, most preferably from 80-100%. "Green tea" also includes the so-called "white teas".

"Fermentation" refers to the oxidative and hydrolytic process that tea undergoes when certain endogenous enzymes and substrates are brought together, e.g., by mechanical disruption of the cells by maceration of the leaves. During this process colourless catechins in the leaves are converted to a complex mixture of yellow and orange to dark-brown polyphenolic substances.

"Fresh tea material" refers to a combination of leaves and stem that have never been dried to a water content of less than 30% by weight, and usually have a water content in the range 60 to 90%.

### Catechins

As used herein the term "catechins" is used as a generic term for catechin, gallocatechin, catechin gallate, gallocatechin gallate, epicatechin, epigallocatechin, epicatechin gallate, epigallocatechin gallate, and mixtures thereof.

### Total Polyphenols

The total polyphenol content of a sample is determined using the Folin-Ciocalteu method as detailed in the International Standard published by the International Organization for Standardization as ISO 14502-1:2005(E).

Aerobic Conditions

Where tea material is said to undergo a process under "aerobic conditions" this means that the material is in contact with an atmosphere comprising gaseous oxygen. Preferably the atmosphere comprises at least 10% v/v oxygen, more preferably from 15 to 100% v/v oxygen. Conveniently the atmosphere is air.

Steaming

The term "steaming" as used herein means contacting fresh tea leaves with steam at a temperature of 100 °C or more for a period of 1 minute or more thereby to deactivate the endogenous fermentation enzymes.

Pan Firing

The term "pan firing" as used herein means contacting fresh tea leaves with a hot surface which is at a temperature greater than 200 °C for a period of 5 minutes or more thereby to deactivate the endogenous fermentation enzymes.

Tray Drying

The term "tray drying" as used herein means spreading fresh tea leaves on a metal surface and then heating (preferably with hot air) to a temperature greater than 70 °C but less than 150 °C to reduce the moisture content of the tea leaves.

CTC

"CTC" comes from the words "crush, tear and curl". CTC machines and processes are well-known to those skilled in black tea manufacture (see, for example, "Tea: Cultivation to Consumption", K.C. Willson and M.N. Clifford (Eds), 1st Edn, 1992, Chapman & Hall (London), Chapter 14, pp. 483-485 ). Where reference is made to at least one CTC process or machine, this means at least one pass through a pair of CTC rollers.

Leaf Particle Size

For the purposes of the present invention, leaf particle size is characterised by sieve mesh size of particles post-drying and using the following convention:

- Tyler mesh sizes are used throughout.
- A "+" before the sieve mesh indicates the particles are retained by the sieve.
- A "-" before the sieve mesh indicates the particles pass through the sieve.

For example, if the particle size is described as -5 +20 mesh, then the particles will pass through a 5 mesh sieve (particles smaller than 4.0 mm) and be retained by a 20 mesh sieve (particles larger than 841 $\mu$m).

Miscellaneous

Except in the examples, or where otherwise explicitly indicated, all numbers in this description indicating amounts of material or conditions of reaction, physical properties of materials and/or use may optionally be understood as modified by the word "about".
All amounts are by weight of the final composition, unless otherwise specified.
It should be noted that in specifying any range of values, any particular upper value can be associated with any particular lower value.
For the avoidance of doubt, the word "comprising" is intended to mean "including" but not necessarily "consisting of" or "composed of". In other words, the listed steps or options need not be exhaustive.

SUMMARY OF THE INVENTION

In a first aspect, the present invention provides a process for manufacturing a green leaf tea product, the process comprising the steps of:

a) providing fresh tea material comprising catechins and active endogenous enzymes, wherein the fresh tea material comprises leaf material and stem material;
b) optionally withering the fresh tea material;
c) separating the leaf material from the stem material whilst the fresh tea material comprises active endogenous enzymes, to provide tea material rich in leaf; and
d) inactivating the endogenous enzymes in the tea material rich in leaf to substantially prevent fermentation of the tea material rich in leaf; and
e) drying the tea material rich in leaf to yield the green leaf tea product,

wherein step (d) occurs simultaneously with step (e).
This process is found to yield green tea products which give infusions with exceptional green colour and/or a floral aroma and/or low bitterness. In addition the process may allow for relatively simple and low-energy production of green tea as no separate enzyme deactivation step (such as steaming or pan firing) is necessary as enzymes can be deactivated by drying. The absence of a steaming or pan firing step is also undesirable from a taste point of view because these enzyme deactivation steps can often bring unwanted off-tastes and aromas such as fishy notes. Preferably therefore the process consists essentially of steps (a) to (e).

In a second aspect, the present invention provides a leaf tea product obtained and/or obtainable by the process. Such a leaf tea has the high catechin content of conventional green teas but has a modified aroma profile which results in mild taste and/or floral aroma.

## DETAILED DESCRIPTION

Fresh tea material is employed in the process of the present invention. When fresh tea material is harvested, it is typically picked as shoots with each shoot comprising an active growing bud, e.g. in the form of the first two, three, or four leaves together with the unopened bud (e.g., so-called "two-and-a-bud" and/or "three-and-a-bud" material). The fresh tea material may also be mechanically harvested tea material in which case the material may comprise shoots without an active growing bud and/or shoots with more than four leaves.

In the process of the present invention, the fresh tea material is separated to remove at least some of the stem material to provide tea material rich in leaf. The material rich in leaf preferably comprises at least 50% by weight of leaf material, more preferably at least 70%, more preferably still at least 80% and most preferably from 90 to 100%.

US 2009 / 0117250 discloses separation of fresh tea material to provide tea material rich in stem which was then processed to produce a tea product. In contrast, in the present invention, the tea material rich in leaf is used.

Separation can be effected in any convenient manner, for example by separating the leaf material and stem material by hand. However it is especially preferred that the separation is achieved in at least a semi-automated manner. In this respect the separation may comprise passing the fresh tea material though an air separation machine. Machines which work on the air separation principle are commercially available, one such example being the "Leaf Sorting Machine" marketed by Hans Binder Maschinenbau GmbH (Marzling-Freising, Germany).

In one embodiment the fresh tea material is separated without withering. However it is possible to wither the material prior to separation to allow development of certain desirable flavours and/or aromas. Preferably the fresh tea material is withered to a moisture content of less than 75% by weight, more preferably to a moisture content in the range of 63 to 73 wt%.

Surprisingly, the present inventors have found that by selectively processing the leaf material separately from the stem, exceptional green colour can be retained in infusions prepared from the resulting leaf tea even where the separation of the fresh tea material occurs whilst the fresh tea material comprises active endogenous enzymes, such as oxidases, peroxidises or a combination thereof. Thus in the process of the present invention there is no enzyme deactivation step (such as steaming or pan firing) prior to or during the separation step. Without wishing to be bound by theory, we believe that separation of the leaf material from the stem material whilst the endogenous enzymes are still active allows for mild fermentation-like reactions to occur in the tea leaves leading to generation of desirable aroma without causing excessive browning. These mild fermentation-like reactions may be assisted by oxygen and so it is preferred that the separation step occurs under aerobic conditions.

The fermentation-like reactions may also be assisted by liberating the fermentation enzymes. Thus it is preferred that the material rich in leaf is comminuted to significantly reduce the leaf particle size, more preferably whilst the material rich in leaf comprises active endogenous enzymes. In particular it is preferred that at least 50 wt% of the comminuted material rich in leaf has a particle size of -5 mesh, more preferably at least 70 wt% and most preferably from 90 to 100 wt%. The comminution is preferably not such as to reduce the leaf particle size excessively as then fermentation may be accelerated in the leaves. Thus it is preferred that at least 50 wt% of the comminuted tea material rich in leaf has a particle size of +20 mesh, more preferably at least 70 wt% and most preferably from 90 to 100 wt%. The comminution may be suitably achieved by passing the material rich in leaf through at least one CTC process.

In a preferred embodiment the process consists essentially of steps (a) to (e) with a comminution step prior to step (d).

To ensure that the final product is a green tea, the fermentation-like reactions must not be allowed to destroy the majority of the catechins, otherwise the final product would not have green-tea character.

The degree of fermentation is conveniently judged by the proportion of oxidised catechins. In particular, one can measure a quantity, $C_0$, which is the amount of catechins in the fresh tea material prior to separation in percent by dry weight of the fresh tea material. One can then measure a second quantity, $C_F$, which is the amount of catechins in the tea material rich in leaf after the enzyme deactivation step in percent by dry weight of the material rich in leaf. One can then use these values to calculate a parameter, $R$, related to the degree of fermentation, as the content of catechins in the material rich in leaf after inactivation as a percentage of the content of catechins in the fresh tea material prior to separation on a dry weight basis. In other words, the parameter $R$ can be calculated as follows:

$$R\,(\%) = 100\,C_F\,/\,C_0,$$

such that for negligible fermentation $R$ = 100% and for complete fermentation $R$ = 0%.

Methods for determining the catechin content of tea material are well known in the art and one such method is given in the international patent application published as WO 2009/059927 (Unilever).

For the purposes of the present invention the fermentation is arrested by enzyme inactivation to substantially prevent fermentation. Preferably the enzyme deactivation occurs to prevent the content of catechins in the material rich in leaf falling below 60% of the content of catechins of the fresh tea material prior to separation on a dry weight basis, i.e. before *R* falls below 60%. More preferably the endogenous enzymes in the material rich in leaf are inactivated to prevent the content of catechins in the tea material rich in leaf falling below 70% of the content of catechins of the fresh tea material prior to separation on a dry weight basis. Most preferably *R* is from 80-100%.

The final leaf tea product is obtained by drying the material rich in leaf. Conveniently the enzyme deactivation is effected simultaneously with drying thus removing any need for a separate enzyme deactivation step such as steaming or pan firing. For example the enzyme deactivation may be achieved by tray drying and/or fludized bed drying the tea material rich in leaf to yield the green leaf tea product.

The final leaf tea product may be sorted according to particle size. Preferably the final product is sorted to recover a fraction wherein at least 50 wt% of the leaf tea has a particle size of -5 +20 mesh, more preferably at least 70 wt% and most preferably at least 90 wt%.

**EXAMPLES**

The present invention will be further described with reference to the following examples.

Example 1

*Sample Preparation*

Fresh Kenyan tea was harvested and the fresh material which comprised mainly of 3-and-a-bud shoots was separated into two streams.

A first stream Was submitted to manual stem and leaf separation. The stem was discarded while the material consisting of the leaves and buds (the "leaf only" or "LO" stream) was processed into leaf tea.

A second stream (the "whole shoot" or WS stream) was processed into leaf tea without stem separation.

Leaf tea processing was conducting in one of two ways, either:

- the stream of material was steamed (enzyme inactivation), subjected to 3 passes through a CTC machine and then fluid bed dried;
- the stream of material was not steamed but directly subjected to 3 passes through a CTC machine and then fluid bed dried.

The leaf teas were each sieved into standard fractions (denoted XL+, LL and ML).

*Results*

Each of the leaf tea fractions was infused in freshly boiled water in an amount of 2 g of tea in 200 ml water for 2 minutes. The colour of the resulting infusions was then determined with a Minolta™ CT-310 colourimeter.

The data in Tables 1 to 3 below show the results of the colour analysis using the *CIE* 1976 (L*, a*, b*) color space for the three size fractions. Of particular interest is the coordinate a* as more negative values of this coordinate indicate more green colour whilst more positive values indicate more magenta colour.

TABLE 1 - XL+ Size Fraction

| Stream | Processing | L* | a* | b* |
|--------|------------|------|-------|-------|
| LO | Steamed | 94.58 | -7.71 | 19.28 |
| LO | No steam | 91.95 | -5.07 | 21.92 |
| WS | Steamed | 94.81 | -7.38 | 18.48 |
| WS | No steam | 88.96 | -2.95 | 31.48 |

TABLE 2 - LL Size Fraction

| Stream | Processing | L* | a* | b* |
|--------|------------|------|-------|-------|
| LO | Steamed | 94.57 | -7.52 | 19.16 |
| LO | No steam | 91.90 | -5.33 | 24.72 |
| WS | Steamed | 94.80 | -7.40 | 18.51 |
| WS | No steam | 88.75 | -2.73 | 32.22 |

TABLE 3- ML Size Fraction

| Stream | Processing | L* | a* | b* |
|--------|------------|------|-------|-------|
| LO | Steamed | 94.30 | -8.25 | 21.57 |
| LO | No steam | 91.33 | -5.36 | 26.02 |
| WS | Steamed | 94.66 | -7.93 | 20.17 |
| WS | No steam | 87.56 | -2.19 | 36.51 |

It can be seen from the data in Tables 1 to 3 that in every case, leaf teas made from the LO stream gave infusions with a greener colour than those of the leaf teas made from the WS stream and processed in the same way, i.e. the LO steamed teas gave greener infusiuons than the WS steamed teas and the LO unsteamed teas gave greener infusiuons than the WS unsteamed teas.

The brewed teas were also tasted by experienced tea tasters who observed that the infusions prepared from the steamed teas were very bitter. The infusions made from the unsteamed WS tea were less bitter than those from the steamed teas but still had green and hay notes. On the other hand the infusions made from the unsteamed LO tea were not only less bitter than those made from the steamed teas but also had a pleasant floral aroma not found in any of the other infusions.

## Claims

1. A process for manufacturing a green leaf tea product, the process comprising the steps of:

   a) providing fresh tea material comprising catechins and active endogenous enzymes, wherein the fresh tea material comprises leaf material and stem material;
   b) optionally withering the fresh tea material;
   c) separating the leaf material from the stem material whilst the fresh tea material comprises active endogenous enzymes, to provide tea material rich In leaf; and
   d) inactivating the endogenous enzymes in the tea material rich in leaf to substantially prevent fermentation of the tea material rich in leaf; and
   e) drying the tea material rich in leaf to yield the green leaf tea product, wherein step (d) occurs simultaneously with step (e).

2. The process as claimed in claim 1 wherein the enzyme deactivation step (d) prevents the content of catechins in the tea material rich in leaf falling below 60% of the content of catechins of the fresh tea material prior to separation.

3. The process as claimed in claim 1 or claim 2 wherein the material rich in leaf comprises at least 50% by weight of leaf material.

4. The process as claimed in any one of claims 1 to 3 which does not comprise a step of steaming or pan firing the fresh tea material prior to or during step (c).

5. The process as claimed in any one of the preceding claims wherein the material rich in leaf is comminuted.

6. The process as claimed in claim 5 wherein the material rich in leaf is comminuted prior to step (d).

7. The process as claimed in claim 6 wherein the comminution step occurs whilst the material rich in leaf comprises active endogenous enzymes.

8. The process as claimed in any one of the preceding claims wherein the enzyme deactivation is achieved by tray drying and/or fludized bed drying the tea material rich in leaf to yield the green leaf tea product.

9. A green leaf tea product obtainable by the process as claimed in any one of claims 1 to 8.

## Patentansprüche

1. Verfahren zur Herstellung eines Grünteeblattproduktes, wobei das Verfahren umfasst die Schritte:

   a) Bereitstellen eines frischen Teematerials, umfassend Catechine und aktive endogene Enzyme, wobei das frische Teematerial Blattmaterial und Stielmaterial enthält,
   b) gegebenenfalls Verdorrenlassen des frischen Teematerials,
   c) Abtrennen des Blattmaterials von dem Stielmaterial, während das frische Teematerial aktive endogene Enzyme enthält, um ein blattreiches Teematerial zu erlangen, und
   d) Inaktivieren der endogenen Enzyme in dem blattreichen Teematerial, um die Fermentation des blattreichen Teematerials im Wesentlichen zu verhindern, und
   e) Trocknen des blattreichen Teematerials, um ein Grünteeblattprodukt zu erhalten, wobei der Schritt (d) gleichzeitig mit dem Schritt (e) abläuft.

2. Verfahren gemäß Anspruch 1, wobei es der Enzymdeaktivierungsschritt (d) verhindert, dass der Gehalt der Catechine im blattreichen Teematerial unter 60% des Gehalts der Catechine des frischen Teematerials vor dem Abtrennen fällt.

3. Verfahren, wie in Anspruch 1 oder in Anspruch 2 beansprucht, wobei das blattreiche Material mindestens 50 Gew.-% Blattmaterial enthält.

4. Verfahren, wie in irgendeinem der Ansprüche 1 bis 3 beansprucht, das einen Schritt des Dämpfens oder des Pfannenbratens des frischen Teematerials vor oder während des Schritts (c) nicht umfasst.

5. Verfahren, wie in irgendeinem der vorhergehenden Ansprüche beansprucht, wobei das blattreiche Material zerkleinert wird.

6. Verfahren, wie im Anspruch 5 beansprucht, wobei das blattreiche Material vor dem Schritt (d) zerkleinert wird.

7. Verfahren, wie im Anspruch 6 beansprucht, wobei der Zerkleinerungsschritt abläuft, während das blattreiche Material aktive endogene Enzyme umfasst.

8. Verfahren, wie in irgendeinem der vorhergehenden Ansprüche beansprucht, wobei die Enzymdeaktivierung durch Plattentrocknen und/oder Fließbetttrocknen des blattreichen Teematerials ausgeführt wird, um das Grünteeblattprodukt zu ergeben.

9. Grünteeblattprodukt, erhältlich durch das Verfahren gemäß irgendeinem der Ansprüche 1 bis 8.

**Revendications**

1. Procédé pour la fabrication d'un produit de thé vert en feuilles, le procédé comprenant les étapes consistant à :

   a) mettre à disposition un matériel de thé frais comprenant des catéchines et des enzymes endogènes actives, où le matériel de thé frais comprend un matériel de feuilles et un matériel de tiges ;
   b) facultativement, faire flétrir le matériel de thé frais ;
   c) séparer le matériel de feuilles du matériel de tiges alors que le matériel de thé frais comprend des enzymes endogènes actives, afin d'obtenir un matériel de thé riche en feuilles ; et
   d) inactiver les enzymes endogènes présentes dans le matériel de thé riche en feuilles afin d'essentiellement empêcher la fermentation du matériel de thé riche en feuilles ; et
   e) sécher le matériel de thé riche en feuilles afin de générer le produit de thé vert en feuilles, où l'étape (d) est réalisée simultanément avec l'étape (e).

2. Procédé selon la revendication 1, dans lequel l'étape (d) d'inactivation des enzymes empêche la teneur en catéchines dans le matériel de thé riche en feuilles de chuter en dessous de 60 % de la teneur en catéchines du matériel de thé frais avant la séparation.

3. Procédé selon la revendication 1 ou la revendication 2, dans lequel le matériel riche en feuilles comprend au moins 50 % en poids du matériel de feuilles.

4. Procédé selon l'une quelconque des revendications 1 à 3, qui ne comprend pas d'étape de séchage à la vapeur ou de séchage à la poêle du matériel de thé frais avant ou pendant l'étape (c).

5. Procédé selon l'une quelconque des revendications précédentes, dans lequel le matériel riche en feuilles est broyé.

6. Procédé selon la revendication 5, dans lequel le matériel riche en feuilles est broyé avant l'étape (d).

7. Procédé selon la revendication 6, dans lequel l'étape de broyage est réalisée alors que le matériel riche en feuilles comprend des enzymes endogènes actives.

8. Procédé selon l'une quelconque des revendications précédentes, dans lequel l'inactivation des enzymes est réalisée par un séchage sur plateau et/ou un séchage en lit fluidisé du matériel de thé riche en feuilles afin de générer le produit de thé vert en feuilles.

9. Produit de thé vert en feuilles pouvant être obtenu par le procédé selon l'une quelconque des revendications 1 à 8.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002223699 A
- US 20090117250 A

- WO 2009059927 A

**Non-patent literature cited in the description**

- Tea: Cultivation to Consumption. Chapman & Hall, 1992, 483-485